# EUROPEAN PATENT APPLICATION

(11) **EP 3 556 596 A1**
(43) Date of publication of application: **23.10.2019**
(21) Application number: 16924095.9
(22) Date of filing: 15.12.2016
(51) Int. Cl.: B60L 11/18, H01M 10/44

(54) **ELECTRIC VEHICLE BATTERY CHARGING SYSTEM AND METHOD USING MULTI-LAYER DIVISION SCHEME**

(30) Priority: 13.12.2016 KR 20160169730
(71) Applicant: Jang, Wonseok, Jeonju-si, Jeollabuk-do 54997 (KR)
(72) Inventor: Jang, Wonseok, Jeonju-si, Jeollabuk-do 54997 (KR)
(74) Representative: Weickmann & Weickmann PartmbB
(86) International application number: PCT/KR2016/014683
(87) International publication number: WO 2018/110734

(57) **Abstract**

The present invention relates to electric vehicle battery charging system and method using a multi-layer division method which may reduce time required when charging a battery of an electric vehicle and may increase an overall battery capacity by efficiently connecting, arranging, and charging battery cells of the electric vehicle having a limited capacity.

To this end, an electric vehicle battery charging system for charging a battery pack configured with a plurality of battery cells includes the battery pack configured with the plurality of battery cells; at least one connection portion including switching means for electrically connecting the plurality of battery cells to allow a current to flow between the plurality of battery cells or to block the electrical connection state; a plurality of charge terminals which are connected to the plurality of battery cells respectively; and a control unit that controls on/off states of the switching means of the connection portion.

Through this, it is possible to effectively reduce a battery charging time of the electric vehicle.

## Description

### TECHNICAL FIELD

The present invention relates to electric vehicle battery charging system and method using a multi-layer division method, and more specifically, to electric vehicle battery charging system and method using a multi-layer division method which may reduce time required when charging a battery of an electric vehicle and may increase an overall battery capacity by efficiently connecting, arranging, and charging battery cells of the electric vehicle having a limited capacity.

### BACKGROUND ART

Recently, interest in environmental issues, particularly global warming and a climate change has been increased, many countries has discussed implementation of a climate change convention on reduction of carbon dioxide emissions, and in this discussion, it has been pointed out that an increase of carbon dioxide generation causes the global warming is, and carbon emitted from automobiles is a main cause of the increase of carbon dioxide.

According to a carbon emission control policy, a petroleum-based automobile in the automobile industry is required to increase fuel efficiency of an automobile and to reduce carbon emissions of the automobile, and accordingly, the automobile moves by means of electricity, an electric vehicle that does not generate exhaust gas are developed in various forms, and demand thereof is also rapidly increasing.

Since a current electric motor for running the electric vehicle consumes too much electric energy during travel, there is a problem that, when a battery is charged once, a travel distance of the electric vehicle is shorter than a travel distance of a general automobile, and thereby, there is a discomfort that a battery charging work has to be frequently performed.

In addition, since the time required to charge the battery of the electric vehicle is much longer than the time for refueling the general vehicle, it is preferable to charge the electric vehicle during the time when the electric vehicle does not travel.

In particular, when a battery of the electric vehicle charged at present, an external charger may provide electric capacity of approximately50 kW at a time, which is the amount of electric power considering the risk of electric shock or explosion which may occur during the charging. In such a situation, it takes a long time to charge the battery of the electric vehicle, and it is impossible to increase the overall battery capacity due to the above-described risk even if capacity of the external charger is sufficient.

A technology (Korean Patent No. 10-1241670, Battery charging apparatus for changing battery cells to charge seperately and battery charging control method thereof) of related art proposed to solve the above problem proposed a method of measuring a voltage applied to each cell when charging a battery pack configured by a plurality of battery cells, determining a voltage magnitude order, and supplying charging power to the cells having a low voltage level such that battery balancing may be made as a whole.

However, the technology of related art aims to reduce the charging time of a battery pack by effectively performing a battery balancing process and still has a problem that does not propose an alternative to effectively reduce charging time of a battery pack when an external charging power is sufficient and to increase an overall capacity of the battery pack installed in an electric vehicle.

Therefore, development of a technology capable of effectively solving the problems of related art described above is desperately required.

### [DISCLOSURE]

### [Technical Problem]

An object of the present invention is to provide electric vehicle battery charging system and method using a multi-layer division method which may reduce time required when charging a battery of an electric vehicle and may increase an overall battery capacity by efficiently connecting, arranging, and charging battery cells of the electric vehicle having a limited capacity.

### [Technical Solution]

According to one embodiment of the present invention, an electric vehicle battery charging system using a multi-layer division method is an electric vehicle battery charging system for charging a battery pack configured with a plurality of battery cells, and electric vehicle battery charging system includes the battery pack configured with the plurality of battery cells; at least one connection portion including switching means for electrically connecting the plurality of battery cells to allow a current to flow between the plurality of battery cells or to block the electrical connection state; a plurality of charge terminals which are connected to the plurality of battery cells respectively; and a control unit that controls on/off states of the switching means of the connection portion.

In addition, the connection portion may connect in series the plurality of battery cells to each other.

In addition, the control unit may control on/off states of the switching means according to a connection state between each charging terminal connected to each of the plurality of battery cells and an external charging terminal.

In addition, the control unit may control the switching means so as to be maintained as an off state in a case where each charging terminal connected to each of the plurality of battery cells is connected to the external charging terminal, and the control unit may control the switching means of the connection portion of the connected battery cell so as to be maintained as an on state in a case where any one of the charging terminals is connected to the external charging terminal.

In addition, the respective battery cells configuring the battery pack may have different charging capacities, and the control unit may control the connection state between the charging terminal and the external charging terminal such that the amount of power that may be supplied from the external charging terminal connected to the charging terminal of each battery cell is proportional to the charging capacity of each battery cell.

In addition, the plurality of battery cells of the battery pack may have the same charging capacity.

An electric vehicle battery charging method using a multi-layer division method according to another embodiment of the present invention is an electric vehicle battery charging method of an electric vehicle battery charging system for charging a battery pack configured with a plurality of battery cells, and the electric vehicle battery charging method includes a first step of forming a charging terminal in each of the plurality of battery cells; a second step of forming a connection portion that allows a current to flow or not to flow between the plurality of battery cells; a third step of controlling on/off state of the connection portion according to whether or not an external charging terminal is connected to the charging terminal formed in each battery cell; and a fourth step of charging the battery pack according to the on/off state of the connection portion.

In addition, in the third step, the connection portion may be controlled to enter an on state in a case where one external charging terminal is connected to the charging terminal formed in each battery cell, and the connection portion may be controlled to enter an off state in a case where a plurality of external charging terminals are connected to the charging terminals formed in the respective battery cells.

### [Advantageous Effects]

According to one aspect of the present invention, battery charging time of an electric vehicle may be effectively reduced.

In addition, in the battery pack including a plurality of basic capacity batteries, the charging time may be effectively reduced, and a total capacity of the battery pack itself may be increased.

### [Description of the Drawings]

FIG. 1 is a block diagram illustrating a configuration of an electric vehicle battery charging system using a multi-layer division method according to an embodiment of the present invention.
FIG. 2 is a schematic diagram illustrating the configuration of the electric vehicle battery charging system using the multi-layer division method according to the embodiment of the present invention.
FIG. 3 is a schematic diagram illustrating a case where three battery cells are included in the electric vehicle battery charging system using the multi-layer division method according to the embodiment of the present invention.
FIG. 4 is a flowchart illustrating an electric vehicle battery charging method which uses a multi-layer division method according to another embodiment of the present invention.

### [Best Mode for Invention]

According to one embodiment of the present invention, an electric vehicle battery charging system for charging a battery pack configured with a plurality of battery cells includes the battery pack configured with the plurality of battery cells; at least one connection portion including switching means for electrically connecting the plurality of battery cells to allow a current to flow between the plurality of battery cells or to block the electrical connection state; a plurality of charge terminals which are connected to the plurality of battery cells respectively; and a control unit that controls on/off states of the switching means of the connection portion.

### [Detailed Description of the Embodiments]

Hereinafter, the description of the present invention with reference to the drawings is not limited to a specific embodiment, various changes may be applied thereto, and various embodiments may be made. In addition, it is to be understood that the following description covers all changes, equivalents, and alternatives falling within the spirit and scope of the present invention.

In the following description, the terms such as first and second are used to describe various configuration elements, are not limited to their own meaning, and are used only for the purpose of distinguishing one configuration element from another configuration element. In addition, like reference numerals which are used throughout the specification denote like configuration elements.

As used herein, the singular forms "a", "an", and "the" include plural expressions unless the context clearly dictates otherwise. In addition, it is to be understood that the terms "include", "comprise", or "have" which are used herein should be interpreted as specifying the presence of a feature, an integer, a step, an operation, a configuration element, a component, or a combination thereof, and the presence or addition of one or more other features, an integer, a step, an operation, a configuration element, a component, or a combinations thereof are not precluded.

Hereinafter, electric vehicle battery charging system and method using a multi-layer division method according to embodiments of the present invention will be described in detail with reference to the accompanying drawings, and specific embodiments thereof will be described.

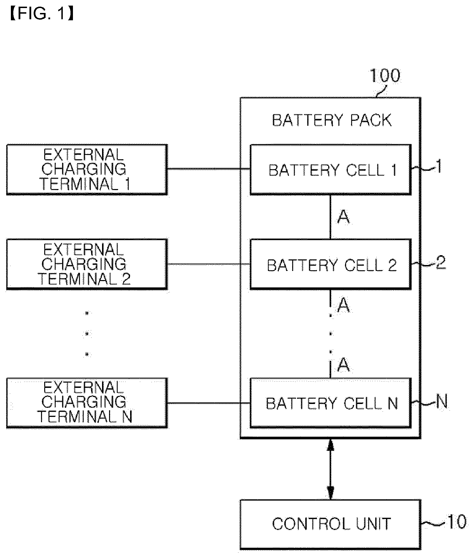

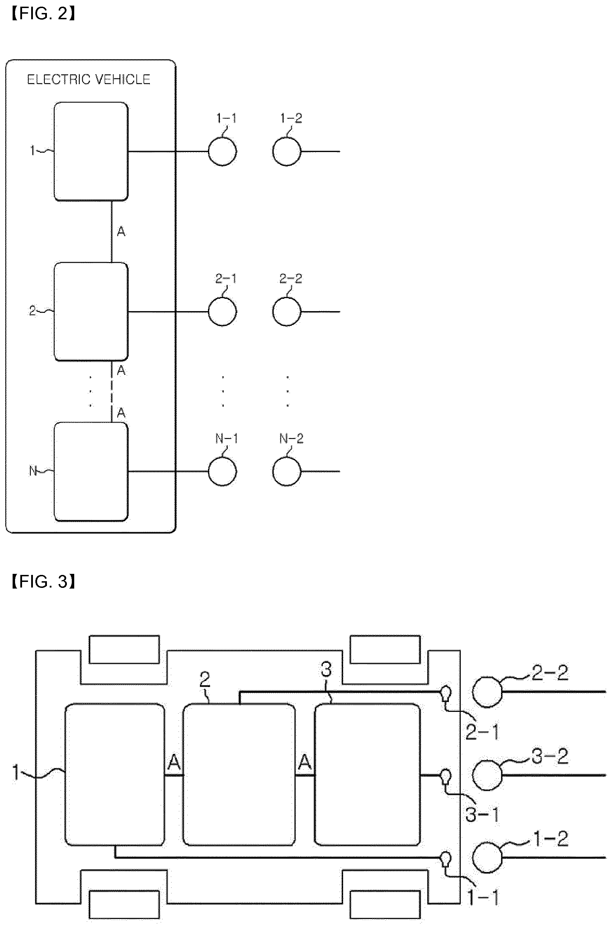

First, a configuration of the electric vehicle battery charging system using the multi-layer division method according to the embodiment of the present invention will be described below with reference to FIGS. 1 and 2.

FIG. 1 is a block diagram illustrating the configuration of the electric vehicle battery charging system using the multi-layer division method according to the embodiment of the present invention, and FIG. 2 is a schematic diagram illustrating the configuration of the electric vehicle battery charging system using the multi-layer division method according to the embodiment of the present invention.

As illustrated in FIG. 1, the electric vehicle battery charging system using the multi-layer division method according to the embodiment of the present invention includes a battery pack (100), a control unit (10), and a plurality of external charging terminals.

The battery pack (100) includes a plurality of battery cells and may include N battery cells of a battery cell1 (1), a battery cell2 (2), ..., and a battery cellN (N) as illustrated in FIG. 1. Here, the respective battery cells may be divided so as to have a proper charge amount in consideration of stability of the battery pack itself or charging power of an external charging device. As a specific example, a charging device for an electric vehicle, which are generally in circulation at present, has a charging capacity of 50 kW, and unless a battery pack provided in the electric vehicle has a structure of a multi-layer division battery cell, the entire battery pack needs to be charged and takes a long time to charge.

However, according to the embodiment of the present invention, it is possible to charge each battery cell in which an electric vehicle battery pack is divided into multiple layers having an appropriate capacity (less than or equal to 50 kW), and thus, in a case where the amount of electric power that may be provided by an external charging device is sufficient, charging time of the battery pack may be remarkably shortened.

In addition, a connection portion (A) may be provided between the plurality of battery cells configuring the battery pack (100), and the connection portion (A) may include a switching means which electrically connects the plurality of battery cells to allow a current to flow between the plurality of battery cells or blocks the electrical connection.

In addition, specifically, the switching means may be a type of an electrical or mechanical switch operating in response to an electrical signal.

In addition, the connection portion (A) may be provided in a number smaller than the number of provided battery cells by one and any material and any method may be applied to the connection portion if each battery cell is electrically connected.

In addition, the control unit (10) controls an on/off state (operation) of the switching means included in the connection portion (A). That is, the control unit (10) may maintain or block the electrical connection between the battery cells by controlling the on/off state of the switching means included in the connection portion (A).

The connection portion (A) may connect the plurality of battery cells to each other in series. That is, as illustrated in FIGS. 1 and 2, the battery cells may be sequentially connected in series. Each of the battery cells may be charged through the series method.

In addition, as illustrated in FIG. 2, the battery cells (1, 2, ..., N) may include charging terminals (1-1, 2-1, ..., N-1), respectively, and the charging terminals may be connected to external terminals (1-2, 2-2, ..., N-2) of an external charging device such that a charging process of each battery cell may be performed.

In a case where the entire battery pack (100) needs to be charged (generally, in a case of a slow charging mode), the respective battery cells have to be in a state of one battery pack (100), the control unit (10) may turn on the connection state of the connection portion (A), the external charging terminal may be connected to any one of the charging terminals formed in each of the battery cells such that the entire battery pack may be charged.

In a case where the respective battery cells configuring the battery pack (100) are required to be charged (generally, in a case of a fast charging mode), the external charging terminals are connected to the charging terminals formed in the respective battery cells, and at this time, the control unit (10) turns off the switching means provided in the connection portion (A). Accordingly, if the respective battery cells are individually charged by the connected external charging device, the control unit (10) again turns on the switching means of the connection portion (A) after the charging is completed, and thereby, the electric power stored in the entire battery pack may be used by the electric vehicle.

In addition, the control unit (10) may control the on/off states of the switching means according to the connection state between each charging terminal connected to each of the plurality of battery cells and the external charging terminal. That is, the control unit (10) may control the on/off state of the switching unit of the connection portion (A) according to the connection state between the external charging terminals and the charging terminals provided in each battery cell. Specifically, if the external charging terminal is connected to one of the charging terminals provided in the respective battery cells, the control unit (10) determines as the charging mode (slow charging mode) for the entire battery pack (100) and controls the state of the switching means of the connection portion (A) so as to be turned on.

If the external charging terminals are connected to all the charging terminals provided in the respective battery cells, the respective battery cells configuring the entire battery pack (100) are individually charged, and thereby, the state of the switching means of the connection portion (A) is controlled to be turned off.

In addition, in a case where each of the charging terminals connected to each of the plurality of battery cells is connected to the external terminal, the control unit (10) controls the switching means to maintain the off state, and if any one of the charging terminals is connected to the external charging terminal, the control unit controls the switching means to maintain the on state.

That is, in a case where the external charging terminals are connected to only a part of the charging terminals of the plurality of battery cells (more than or equal to two battery cells and less than the total number of the battery cells), the control unit (10) controls the connection portion (A) connecting the battery cell connected to the external charging terminal to the adjacent battery cell so as to be in the on state and controls the connection portion (A) connected to other battery cell to which the other external charging terminal is connected so as to be in the off state.

In addition, the respective battery cells configuring the battery pack (100) may have charging capacities different from each other, and at this time, the control unit (10) may control the connection state of the charging terminals and the external charging terminals such that the amount of available power of the external charging terminals connected to the charging terminals of the respective battery cells is proportional to the charging capacities of the respective battery cells.

That is, the control unit (10) may control the external battery charging terminal having a relatively large available charging capacity so as to be connected to the battery cell having a large charging capacity in proportion to the charging capacities of the respective battery cells having different charging capacities, based on information on the amount of available power of the external charging terminals connected to the charging terminals of the respective battery cells, and may control the external battery charging terminal having the amount of relatively small available power so as to be connected to the battery cell having a small charging capacity.

Accordingly, even if the respective battery cells configuring the battery pack (100) have different capacities, charging terminals of a plurality of external charging devices having the amount of different available powers may be connected to the charging terminals according to characteristics (capacity size) of the respective battery cells, and thereby, charging time may be effectively improved.

In addition, each of the plurality of battery cells configuring the battery pack (100) may have the same charging capacity. That is, the external charging devices that may be generally provided usually have the same amount of available power, and when considering this situation, the respective battery cells of the battery charging system according to the embodiment of the present invention may have the same charging capacity.

Next, a case where three battery cells are provided in the electric vehicle battery charging system using the multi-layer division method according to the embodiment of the present invention will be described in detail with reference to FIG. 3.

FIG. 3 is a schematic diagram illustrating the case where three battery cells are provided in the electric vehicle battery charging system using the multi-layer division method according to the embodiment of the present invention.

As illustrated in FIG. 3, the battery pack may be configured by three battery cells (1, 2, and 3) in the electric vehicle battery charging system using the multi-layer division method according to the embodiment of the present invention. Here, each of the battery cells (1, 2, and 3) may have the same charging capacity, the battery cells (1, 2, and 3) may include charging terminals (1-1, 2-1, and 3-1), respectively, and external charging terminals (1-2, 2-2, and 3-2) may be connected to the charging terminals (1-1, 2-1, and 3-1).

In addition, the connection portions (A) may be provided between the respective battery cells (1, 2, and 3), and a connection state of the connection portion (A) may be on and off through a switching means included in the connection portion (A). An operation of the switching means may be performed by the control unit (10).

A specific operation process is as follows. That is, in a case where the external charging terminals (1-2, 2-2, and 3-2) are connected to the charging terminals (1-1, 2-1, and 3-1) of the three battery cells (1, 2, and 3), the battery cells (1, 2, and 3) need to be charged independently, and thus, the control unit (10) turns off the switching means such that connection states of the two connection portions (A) become off states.

In addition, in a case where the external charging terminal 1 (1-2) is connected to the charging terminal (1-1) of the battery cell 1 which is one of the three battery cells (1, 2, and 3), the external charging device is in a state of being connected to the battery cell 1, and the control unit (10) performs a control such that the connection state of the connection portion (A) is turned on so as to maintain a state in which the other battery cells (2 and 3) are connected to the battery cell 1 (1). That is, this case corresponds to a case where there is only one external charging device or a case where there is no problem that it takes a long time in charging (a situation in which slow charging is requested).

In addition, in a case where the external charging terminals 1 and 2 (1-2 and 2-2) are connected to the charging terminals (1-1 and 1-2) of the two battery cells (1 and 2) among the three battery cells (1, 2, and 3), the battery cell 1 (1) and the battery cell 2 (2) may be charged through separate charging devices, the connection portion (A) connecting the two battery cells may be controlled by the control unit (10) such that the state is off, and the remaining battery cell 3 (3) has to be charged in connection with the charging of the battery cell 2 (2) because the remaining battery cell is not connected to a separate external charging device. Thus, the connection portion A connecting the battery cell 2 (2) to the battery cell 3 (3) has to be maintained in the on state.

Through the above-described operation process, the battery cells may be charged individually or in a group according to situations of the external charging device or intention of a user which uses the electric vehicle, and the electric vehicle battery may be charged in various ways through the present system.

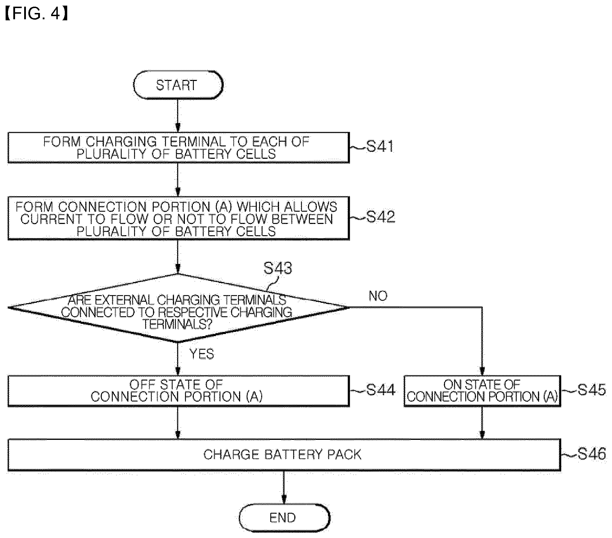

Finally, the electric vehicle battery charging method using the multi-layer division method according to another embodiment of the present invention will be described in detail with reference to FIG. 4.

FIG. 4 is a flowchart illustrating the electric vehicle battery charging method using the multi-layer division method according to another embodiment of the present invention.

The electric vehicle battery charging method using the multi-layer division method according to another embodiment of the present invention may be implemented by including a first step of forming charging terminal in a plurality of battery cells, respectively, a second step of forming a connection portion through which a current may flow or may not flow between the plurality of battery cells, a third step of controlling on/off states of the connection portion according to whether there is an external charging terminal connected to a charging terminal formed in each of the battery cells, and a fourth step of charging the battery pack according to the on/off state of the connection portion.

Specifically, in the electric vehicle battery charging method using the multi-layer division method according to the embodiment of the present invention, charging terminals are formed in a plurality of battery cells respectively (S41), the connection portion (A) through which a current may flow or may be blocked is formed between the plurality of battery cells (S42), whether or not an external charging terminal is connected to the charging terminal formed in each battery cell is determined (S43), a state of the connection portion (A) is controlled to be off if the external charging terminal is connected (S44), the state of the connection portion (A) is controlled to be on if the external charging terminal is not connected (S45), and after the processes, the battery pack is charged (S46), as illustrated in FIG. 4.

Specifically, in steps S43 and S44, in a case where the external charging terminal is connected to the battery cell, the connection state of other battery cells that may be connected to the relevant battery cell becomes an off state (through on/off operations of the connection portion (A)). That is, the battery cell connected to the external charging terminal is separated from the other battery cells. However, if the other battery cells that may be connected to the relevant battery cell is not connected to the external charging terminal, the other battery cells are not charged separately, and thus, in this case, the connection with the relevant battery cell connected to the external charging terminal has to be maintained, and thereby, the connection portion (A) between two battery cells may be turned on.

In addition, in steps S43 and S45, in a case where the external charging terminal is not connected to the battery cell, the connection state of other battery cells that may be connected to the battery cell is on (through on/off operations of the connection portion (A)). That is, as described above, in a state where the external charging terminal is not separately connected to the relevant battery cell, the connection state with the other battery cells that may be connected to the relevant battery cell has to be maintained, and the connection portion (A) may be maintained in the on state.

According to the embodiments of the present invention described above, charging time of a car with a battery of a large capacity is effectively reduced. In addition, it is possible to solve the problems of charging capacity and charging time limit of a large-sized vehicle that requires a battery with a capacity greater than or equal to 400 kW, such as an electric bus and an electric truck, which will have a dramatic effect on related industries.

In addition, an operation and an effect of the present invention will be described below by using an example.

In a case where a battery pack of an electric vehicle has a capacity of 100 kW, it takes 2 to 3 hours to charge the battery pack with a fast charger of 50 kW. In this case, in a case where the battery pack of the electric vehicle is divided into two compartments of 50 kW + 50 kW and the installed external charging device has two capacities of 50 kW, the battery pack may be simultaneously charged through two terminals, and thereby, the total charging time may be reduced by half compared with the battery pack of related art.

In addition, in a case where the external charging terminals for simultaneous charging is increased in the above-described manner, the charging time may be reduced as the number of simultaneous charging terminals (the terminals formed in the respective battery cells and the external charging terminals) increases.

In a case where a battery pack having a capacity of 100 kW is mounted in an electric vehicle and is charged with four (four terminals) fast chargers (external chargers) of 50 kW, there is an effect that the battery pack is charged with 200 kW for approximately one hour, and thereby, there is an effect that the battery pack having a capacity of 100 kW may be buffered within approximately 30 minutes in total.

In addition, it is essential that the battery pack is divided into a plurality of battery cells and each battery cell includes each charging terminal because the recommended battery capacity of an electric vehicle requiring a traveling distance of 500 km in the future will be more than or equal to 100 kW.

In addition, in a case where a battery of the electric vehicle is charged by a slow charger of 3 kW class which is a generally disclosed external charging device, the buffer time more than or equal to 40 hours is usually required. In addition, charging time of 2 to 3 hours is required even if the battery is charged with the fast charger of 50 kW class, and for this reason, the charging system of the present invention will be more useful.

In addition, if an electric bus is commercialized in the future, the battery pack will have a capacity greater than or equal to 400 kW, and for this reason, charging time will be remarkably reduced by dividing the battery pack into a plurality of battery cells and by simultaneously charging each battery cell (battery compartment).

As described above, an electric vehicle battery charging system and method using a multi-layer division method according to embodiments of the present invention are described with reference to specific examples. However, the present invention is not limited to the embodiments described above and may be modified and changed in some ways. Accordingly, claims of the present invention may include modifications and changes falling within the true scope of the present invention.

## Claims

1. An electric vehicle battery charging system for charging a battery pack configured with a plurality of battery cells comprising:
the battery pack configured with the plurality of battery cells;
at least one connection portion including switching means for electrically connecting the plurality of battery cells to allow a current to flow between the plurality of battery cells or to block the electrical connection state;
a plurality of charge terminals which are connected to the plurality of battery cells respectively; and
a control unit that controls on/off states of the switching means of the connection portion.

2. The Electric vehicle battery charging system using a multi-layer division system according to Claim 1, wherein the connection portion connects in series the plurality of battery cells to each other.

3. The Electric vehicle battery charging system using a multi-layer division system according to Claim 1, wherein the control unit controls on/off states of the switching means according to a connection state between each charging terminal connected to each of the plurality of battery cells and an external charging terminal.

4. The Electric vehicle battery charging system using a multi-layer division system according to Claim 3, wherein the control unit controls the switching means so as to be maintained as an off state in a case where each charging terminal connected to each of the plurality of battery cells is connected to the external charging terminal, and the control unit controls the switching means of the connection portion of the connected battery cell so as to be maintained as an on state in a case where any one of the charging terminals is connected to the external charging terminal.

5. The Electric vehicle battery charging system using a multi-layer division system according to Claim 4,
wherein the respective battery cells configuring the battery pack have different charging capacities, and
wherein the control unit controls the connection state between the charging terminal and the external charging terminal such that the amount of power that is supplied from the external charging terminal connected to the charging terminal of each battery cell is proportional to the charging capacity of each battery cell.

6. The Electric vehicle battery charging system using a multi-layer division system according to Claim 1, wherein the plurality of battery cells of the battery pack have the same charging capacity.

7. An electric vehicle battery charging method of an electric vehicle battery charging system for charging a battery pack configured with a plurality of battery cells, the electric vehicle battery charging method comprising:
a first step of forming a charging terminal in each of the plurality of battery cells;
a second step of forming a connection portion that allows a current to flow or not to flow between the plurality of battery cells;
a third step of controlling on/off state of the connection portion according to whether or not an external charging terminal is connected to the charging terminal formed in each battery cell; and
a fourth step of charging the battery pack according to the on/off state of the connection portion.

8. The electric vehicle battery charging method using multi-layer division method according to Claim 7, wherein, in the third step, the connection portion is controlled to enter an on state in a case where one external charging terminal is connected to the charging terminal formed in each battery cell, and the connection portion is controlled to enter an off state in a case where a plurality of external charging terminals are connected to the charging terminals formed in the respective battery cells.
